# FASCICULE DE BREVET EUROPEEN

(11) **EP 0 472 461 B1**
(45) Date de publication et mention de la délivrance du brevet: **01.03.1995**
(21) Numéro de dépôt: 91402263.7
(22) Date de dépôt: 19.08.1991
(51) Int. Cl.: G21C 5/10

(54) **Dispositif de cloisonnement de coeur pour réacteur nucléaire**
Kernumfassung für Kernreaktor
Baffle assembly for nuclear reactor

(30) Priorité: 21.08.1990 FR 9010526
(43) Date de publication de la demande: 26.02.1992
(73) Titulaire: FRAMATOME, 92400 Courbevoie (FR)
(72) Inventeur: Chevereau, Gérard, F-93340 Le Raincy (FR); Bougis, Jean-Claude, F-92400 Courbevoie (FR); Borrell, Christian, F-78420 Carrières s/Seine (FR)
(74) Mandataire: Fort, Jacques

(56) Documents cités:
- EP-A- 0 039 288
- EP-A- 0 060 777
- DE-A- 2 024 630
- FR-A- 2 484 125

## Description

La présente invention a pour objet un dispositif de cloisonnement de coeur pour réacteur nucléaire, destiné à occuper l'espace annulaire compris entre le coeur du réacteur, de forme prismatique, et une enveloppe cylindrique de coeur et comportant des plaques de cloison verticales entourant le coeur et des éléments de renfort placés entre les plaques de cloisonnement et l'enveloppe.

On connaît déjà de nombreux dispositifs de cloisonnement du type ci-dessus. Ils obligent le réfrigérant, arrivant sous une plaque support de coeur par l'intervalle annulaire qui sépare l'enveloppe d'une cuve de résistance à la pression, à circuler à travers les assemblages de combustible constituant le coeur. Dans les réacteurs actuels à eau sous pression par exemple, le dispositif de cloisonnement occupe l'intervalle compris entre le coeur, de forme prismatique avec des facettes à angles droits, et l'enveloppe cylindrique.

Dans la plupart des dispositifs de cloisonnement existants à l'heure actuelle, les plaques de cloisonnement verticales ou "baffles" sont maintenues par des plaques horizontales, appelées conformateurs. Le montage d'un tel dispositif de cloisonnement, qui doit respecter des exigences dimensionnelles strictes et supporter les conditions de température, de rayonnement et de pression différentielle régnant à proximité immédiate du coeur, pose des problèmes qui ne sont que partiellement résolus à l'heure actuelle. En particulier l'assemblage des plaques et des conformateurs dans le réacteur, à l'aide de vis dont le nombre dépasse largement le millier, est long et délicat. La rupture d'une vis provoque l'ouverture d'un jeu, et donc d'un jet de fuite nocif pour les crayons des assemblages placés à proximité.

On connaît également (DE-A-2 024 630) un dispositif conforme au préambule de la revendication 1.

La présente invention vise à fournir un dispositif de cloisonnement répondant mieux que ceux antérieurement connus aux exigences de la pratique, notamment en ce qu'il réduit très considérablement les opérations à effectuer sur place, à l'intérieur même de la cuve du réacteur, et assure une fiabilité accrue.

Dans ce but, l'invention propose notamment un dispositif de cloisonnement conforme à la partie caractérisante de la revendication 1.

Dans le cas d'un réacteur nucléaire comportant des assemblages à section carrée, les panneaux seront généralement répartis entre trois rangées et quatre colonnes.

L'invention sera mieux comprise à la lecture de la description qui suit d'un mode particulier de réalisation de l'invention, donné à titre d'exemple non limitatif. La description se réfère aux dessins qui l'accompagnent, dans lesquels :
- la figure 1 est un schéma en perspective montrant la forme générale du dispositif de cloisonnement, la constitution des panneaux n'étant indiquée que sur une fraction angulaire seulement du dispositif;
- la figure 2 est une vue en perspective éclatée montrant les trois panneaux d'une même colonne et les clés placées d'un côté de ces panneaux ;
- la figure 3 est une vue en coupe horizontale d'une clé, juste au-dessus d'un renfort de clé à la partie gauche, au niveau d'une vis de fixation à l'enveloppe à la partie droite ;
- les figures 4 et 5 sont des vues en coupe suivant un plan vertical passant par l'axe de coeur montrant les bandes d'étanchéité entre clés superposées et entre plaques de cloisonnement superposées, respectivement ;
- la figure 6 est une vue en coupe suivant un plan vertical passant par l'axe du cloisonnement et du coeur et par l'axe d'un poteau d'appui sur la plaque support de coeur.

Le dispositif de cloisonnement qui sera maintenant décrit à titre d'exemple est utilisable dans un réacteur nucléaire à eau sous pression ayant une constitution générale de type connu. Il peut par exemple se substituer à un dispositif de cloisonnement du genre décrit dans le document FR-A-2 484 125, auquel on pourra se reporter.

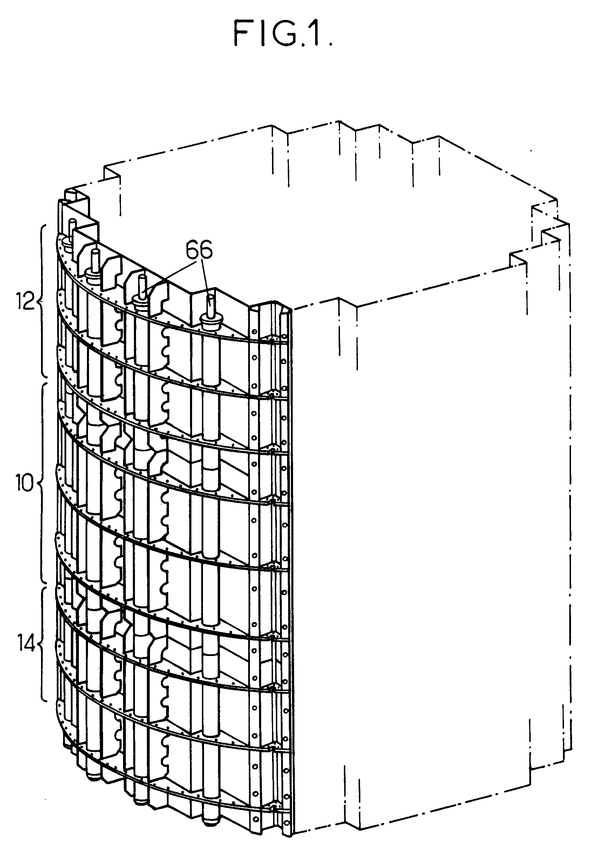

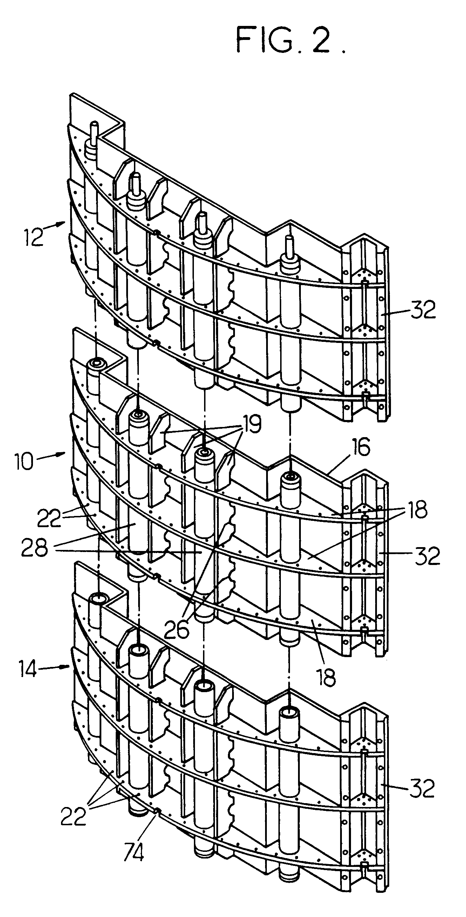

Le dispositif de cloisonnement montré en figures 1 et 2 est fractionné en modules réalisables en usine, avant montage dans le réacteur. Ces modules constituent-chacun une fraction azimutale et verticale du cloisonnement. Dans le mode de réalisation représenté à titre d'exemple, ces modules comprennent douze panneaux, répartis en trois rangées horizontales et quatre colonnes verticales. Des clés relient les panneaux d'une même rangée entre eux.

Les panneaux ont tous la même constitution générale. Cependant, en général les panneaux 10 constituant la rangée médiane auront une hauteur supérieure à celle des panneaux 12 et 14 constituant les rangées supérieure et inférieure. De plus, les panneaux de la partie inférieure, situés juste au-dessus de la plaque support de coeur, auront généralement un système de fixation différent, comme on le verra plus loin.

Le fractionnement en douze panneaux résulte de considérations technologiques, et notamment des contraintes liées au gauchissement et à la courbure dans les directions horizontale et verticale dues au retrait après les opérations de soudage des renforts de raidissement. Un nombre différent pourrait être préférable pour un réacteur dont le coeur est constitué d'assemblages de section hexagonale et/ou est de grande hauteur.

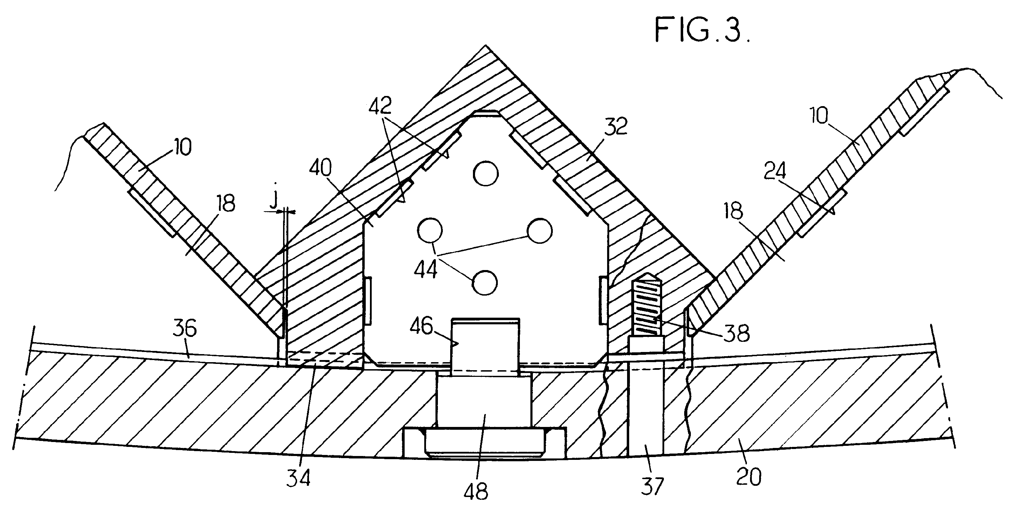

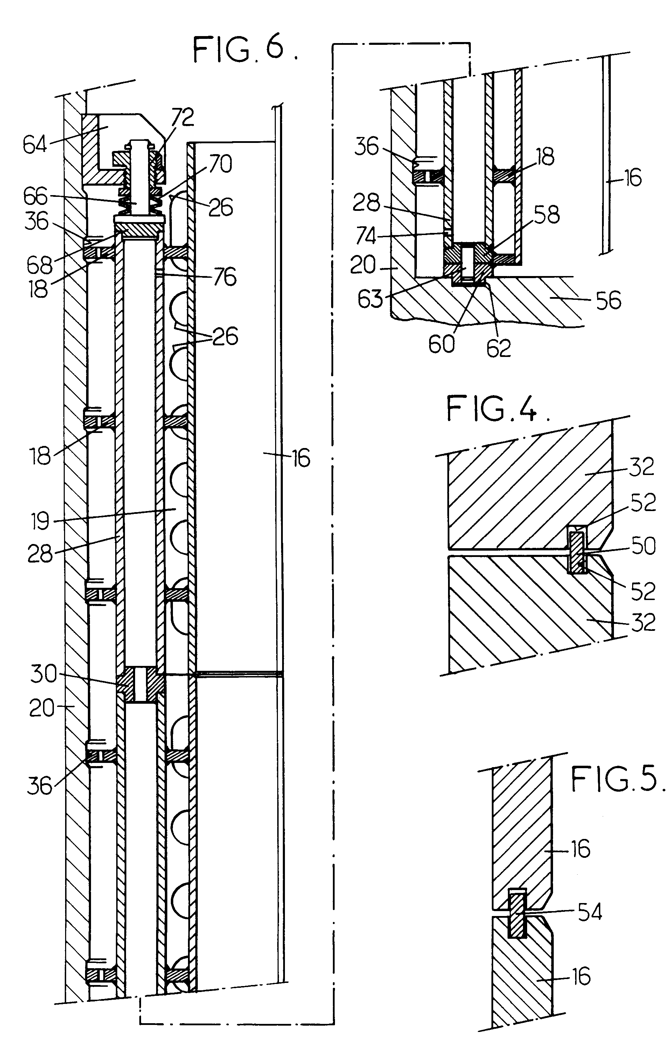

On décrira maintenant, à titre d'exemple, la constitution du panneau médian 10 montré en figure 2. Ce panneau comporte une cloison interne 16 formée de plaques verticales minces, assemblées par soudage, généralement par faisceau d'électrons, de façon à reconstituer la périphérie prismatique du coeur. La rigidité du panneau est assurée par des renforts horizontaux 18 et verticaux 19 soudés à la face de la cloison opposée au coeur. Les renforts horizontaux 18, au nombre de trois dans le mode de réalisation montré en figures 1 et 2, ont un bord externe en arc de cercle, de diamètre correspondant à celui de l'enveloppe de coeur 20 (figures 3 et 6). Ces renforts sont percés de trous 22 répartis circonférentiellement au voisinage du bord convexe et d'encoches rectangulaires 24 (figure 3) le long du contour'rectiligne. Ces trous et ces encoches ont pour but d'autoriser la circulation d'un faible débit ascendant de réfrigérant qui refroidit le dispositif de cloisonnement et la surface interne de l'enveloppe 20.

Les renforts verticaux 19, au nombre de quatre dans le mode de réalisation illustré, sont fragmentés en tronçons séparés par les renforts horizontaux 18. Ces renforts occupent la totalité de la hauteur de la cloison 16. Ils sont fixés par soudage, comme les renforts horizontaux. Des échancrures 26 sont ménagées dans le bord des renforts verticaux en appui contre la cloison 16 afin d'éviter la nécessité d'un soudage continu, pour diminuer les effets du retrait, pour permettre des courants de circulation horizontaux d'équilibrage de la pression dans les caissons délimités par les renforts, la cloison et l'enveloppe et enfin pour diminuer l'échauffement dû au rayonnement γ.

Les cloisons et les renforts verticaux de deux panneaux superposés ne sont pas directement en appui mutuel. Les éléments des panneaux qui reposent les uns sur les autres sont constitués par des tubes verticaux 28, plus épais que les cloisons et les renforts, qui traversent les renforts horizontaux 18 et sont soudés à ces renforts. Les tubes 28 d'une même colonne sont destinés à reposer les uns sur les autres par l'intermédiaire de douilles de centrage et d'appui 30 ( figure 6 ) pour constituer des poteaux de supportage, d'indexage et de retenue du dispositif de cloisonnement, comme on le verra plus loin. L'effet de rigidification des tubes s'ajoute à celui des renforts verticaux.

Entre les panneaux sont disposées des clés massives de jonction 32, en nombre égal à celui des panneaux. Chacune des clés 32 est constituée par un profilé de même longueur que la cloison correspondante, en forme de cornière, dont les branches sont usinées pour présenter des flancs d'appui des bords des cloisons appartenant aux deux panneaux adjacents d'une même rangée (figure 3). Des bossages 34 faisant saillie à partir des branches de chaque clé sont répartis verticalement et prévus pour s'engager dans des rainures circonférentielles 36 de l'enveloppe 20. Ces bossages sont situés au même niveau que les renforts horizontaux 18 des panneaux. Les clés sont prévues pour être fixées chacune sur l'enveloppe 20 par deux rangées verticales de vis (non représentées) traversant des trous 37 de l'enveloppe et s'engageant dans des trous borgnes taraudés 38 ménagés dans la clé. Un circuit de refroidissement des vis est généralement prévu. Il peut comporter un chambrage usiné dans la paroi de la clé et dans l'axe de chaque vis et un jeu entre la face interne de la clé et l'enveloppe de coeur.

A l'intérieur des clés 32 sont soudés des goussets de renfort 40 situés au même niveau que les renforts horizontaux 18 des panneaux. Dans les bords de ces goussets sont ménagées des encoches 42, rectangulaires par exemple, destinées à limiter les zones de soudage et également à autoriser un débit de circulation de réfrigérant le long des clés. Dans le mode de réalisation représenté, les goussets 40 sont également percés de trous 44 de circulation de réfrigérant.

Une échancrure rectangulaire ménagée dans certains des goussets ou dans chaque gousset 40, face à l'enveloppe 20, est destinée à recevoir un pion cylindrique 48 d'indexage traversant l'enveloppe 20.

La continuité du dispositif de cloisonnement dans le sens circonférentiel est obtenue par l'appui des parties latérales des cloisons 10 contre les clés, un jeu j étant réservé pour autoriser les dilatations différentielles (figure 3). La continuité dans le sens vertical, nécessaire pour éviter le passage d'un débit de fuite entre le coeur et le dispositif de cloisonnement, est rétablie par des moyens d'étanchéité autorisant les dilatations différentielles et qui ont avantageusement la constitution montrée en figures 4 et 5. Les moyens placés entre deux clés 32 superposées sont constitués par une bande mince 50, à section rectangulaire allongée, généralement en acier inoxydable, interposée entre les deux clés et pénétrant dans des rainures 52 usinées dans les faces en regard. Des jeux peuvent être prévus, dans le sens radial pour tenir compte des tolérances et dans le sens longitudinal pour permettre les dilatations différentielles. Comme le montre la figure 5, la continuité entre les plaques superposées de la cloison 16 est rétablie de façon similaire par des bandes 54.

Le maintien relatif des panneaux peut être réalisé par verrouillage des poteaux sur l'enveloppe 20, solidaire de la plaque inférieure de coeur 56. On peut en particulier utiliser la disposition montrée en figure 6. Dans ce cas, le bas de chaque tube 28 appartenant à un panneau inférieur est fermé par un bouchon 58 soudé sur un cimblot 60 qui présente un épaulement destiné à s'appuyer sur la plaque inférieure de coeur 56 et un prolongement destiné à s'insérer dans un logement de centrage 62 usiné dans la plaque 56. Une broche 63 peut être prévue pour renforcer la liaison entre bouchon et cimblot, réalisée au moment du montage pour permettre la compatibilité des usinages sur l'enveloppe de coeur 20, la plaque 56 et les bouchons 58.

Les douilles 30 assurent le centrage relatif des tubes superposés 28. Enfin, les tubes constituant un poteau sont pressés contre la plaque inférieure de coeur 56 par des moyens de verrouillage ayant une élasticité permettant de tolérer les dilatations différentielles et mettant les poteaux en compression. Les moyens de verrouillage montrés en figure 6 comprennent une chaise 64 fixée sur l'enveloppe de coeur 20, par exemple par des vis non représentées, et en appui contre un épaulement de l'enveloppe. Il comprennent également un poussoir 66 en appui contre une clé supérieure 68 fermant le poteau. Un plateau d'appui du ressort reçoit l'effort de rondelles Belleville 70 mises en compression par un manchon fileté 72 vissé dans la chaise 64.

Une circulation de réfrigérant à l'intérieur du cloisonnement est organisée pour refroidir ce cloisonnement et aussi pour établir, entre le coeur et l'intérieur du cloisonnement, une différence de pression qui tend à plaquer les renforts horizontaux 18 des panneaux contre l'enveloppe de coeur. Cela implique d'imposer une perte de charge élevée au réfrigérant à l'entrée du cloisonnement, à la partie basse de ce dernier.

Dans le mode de réalisation illustré, cette perte de charge est assurée en donnant une section faible aux trous 22 ménagés dans le renfort horizontal le plus bas des panneaux inférieurs 14.

Le réfrigérant circule ensuite dans les trous prévus dans tous les renforts horizontaux, jusqu'au-dessus du cloisonnement.

Pour permettre la circulation de réfrigérant à l'intérieur des poteaux, des trous 74 et 76 sont prévus respectivement à la partie basse et à la partie haute de ces poteaux.

A titre d'exemple, on peut indiquer au'un cloisonnement de réacteur à eau soue pression peut être constitué en douze panneaux, les panneaux 12 et 14 ayant une hauteur d'environ 1 300 mm tandis que les panneaux 10 ont une hauteur d'environ 1 480 mm. Les renforts verticaux peuvent être moins épais que les renforts horizontaux, étant donné que leur action est complétée par celle des tubes. Ils peuvent avoir une épaisseur de 15 mm au lieu de 25 mm par exemple. Les cloisons 16 peuvent avoir une épaisseur de 15 mm seulement, ce gui limite l'échauffement dû au rayonnement γ. Les clés peuvent être fixées par un nombre relativement faible de vis, par exemple quarante pour chaque file verticale de clés. Dans le mode de réalisation représenté sur les figures, chaque panneau comporte quatre tubes, mais un nombre plus élevé ou moins élevé pourrait être adopté.

On voit que le dispositif suivant l'invention garantit une mise en place correcte des différents composants. Les pions 48 (figure 3) assurent l'indexage des clés. Des pions similaires, s'engageant dans des encoches 74 de certains des renforts horizontaux (figure 2) peuvent être prévus pour assurer de façon similaire l'indexage des panneaux. La mise en position des panneaux les uns au-dessus des autres est garantit par la présence des pions de centrage 30 (figure 6).

On voit que le dispositif suivant l'invention présente des avantages sur ceux antérieurement connus, qui sont plus ou moins nombreux et importants suivant le nombre des dispositions décrites ci-dessus qui sont adoptées. Le montage est plus simple que celui des dispositifs utilisant des planches verticales vissées sur des conformateurs, d'où un gain de temps important. Le nombre de vis peut être de l'ordre du dixième de celui antérieurement utilisé. Les plaques ou planches de cloisonnement peuvent souvent être dépourvues de trous d'égalisation de pression, car la présence des renforts verticaux et horizontaux rigidifie le dispositif suffisamment pour qu'il puisse résister à une mise en surpression. La fiabilité est accrue, car la fissuration éventuelle d'une soudure d'un renfort ne met pas en péril un panneau de cloisonnement. La correction géométrique du cloisonnement peut être obtenue par usinage des faces d'appui, après les opérations de soudage.

## Revendications

1. Dispositif de cloisonnement de coeur pour réacteur nucléaire, destiné à occuper l'espace annulaire compris entre le coeur du réacteur, de forme prismatique, et une enveloppe cylindrique et comportant des plaques de cloison (16) verticales entourant le coeur et des éléments de renfort placés entre les plaques de cloisonnement et l'enveloppe, comprenant : des panneaux (10,12,14) répartis en rangées horizontales et colonnes verticales, tous les panneaux d'une même rangée étant identiques et ayant des plaques de cloisonnement verticales (16) soudées entre elles et solidaires des renforts horizontaux et verticaux entrecroisés d'appui sur l'enveloppe, caractérisé en ce que les panneaux comprennent de plus, des tubes verticaux (28), les tubes d'une même colonne constituant par leur empilement des poteaux destinés à reposer sur une plaque support de coeur et en ce que le dispositif comprend des clés verticales massives (32) reliant entre eux les panneaux des différentes colonnes appartenant à une même rangée et fixées à l'enveloppe (20).

2. Dispositif selon la revendication 1, caractérisé en ce que les panneaux sont répartis entre trois rangées et quatre colonnes.

3. Dispositif selon la revendication 1 ou 2, caractérisé en ce que les tubes verticaux sont proportionnées par rapport aux plaques de cloisonnement et aux clés de façon qu'un jeu vertical subsiste entre les plaques de cloisonnement et les clés de deux panneaux superposés et en ce qu'une bande (50,54) d'étanchéité est disposée entre deux plaques ou clés superposées et fait saillie dans des rainures en regard des plaques ou clés superposées.

4. Dispositif selon la revendication 1, 2 ou 3, caractérisé en ce que les clés (32) sont constituées par des profilés en forme de cornière munis de moyens de réception de vis de fixation à l'enveloppe (20).

5. Dispositif selon la revendication 4, caractérisé par des goussets de renfort (40) soudés dans les clés au niveau des renforts horizontaux (18) des panneaux.

6. Dispositif selon la revendication 4 ou 5, caractérisé en ce que les clés sont munies de bossages (34) répartis verticalement et prévus pour s'engager dans des rainures circonférentielles (36) de l'enveloppe (20), situés au même niveau que les renforts horizontaux des panneaux.

7. Dispositif selon la revendication 5 ou 6, caractérisé en ce qu'une échancrure rectangulaire (46) est ménagée dans certains au moins des goussets de renfort et en ce que l'enveloppe (20) porte des pions cylindriques d'indexage (48) s'insérant dans les échancrures.

8. Dispositif selon l'une quelconque des revendications précédentes, caractérisé en ce que les tubes d'une même colonne reposent les uns sur les autres par l'intermédiaire de douilles de centrage (30) pour constituer un poteau, en ce que chaque tube d'un panneau inférieur prend appui sur la plaque support de coeur et en ce que des moyens de verrouillage sont interposés entre chaque tube d'un panneau supérieur et l'enveloppe de coeur pour exercer sur le tube un effort d'application du poteau correspondant contre la plaque inférieure de coeur.

9. Dispositif selon la revendication 8, caractérisé en ce que les moyens de verrouillage d'un poteau comporte une chaise (64) fixée à l'enveloppe et des moyens d'appui sur le poteau par l'intermédiaire de moyens élastiques (70).

10. Dispositif selon l'une quelconque des revendications précédentes, caractérisé en ce que les renforts sont percés de trous de circulation circonférentielle et verticale.

## Patentansprüche

1. Kernumfassung für einen Kernreaktor, zum Belegen des ringförmigen Zwischenraums zwischen dem prismatisch geformten Reaktorkern und einem zylindrischen Behälter, mit vertikalen, den Kern umgebenden Umfassungstafeln (16) und zwischen den Umfassungstafeln und dem Behälter angeordneten Verstärkungselementen, mit in horizontalen Reihen und vertikalen Spalten angeordneten Tafeln (10, 12, 14), wobei alle Tafeln in einer Reihe identisch sind und vertikale Umfassungsplatten (16) aufweisen, die untereinander verschweißt und mit horizontalen und vertikalen, gekreuzten, am Behälter anliegenden Verstärkungen versehen sind,
dadurch gekennzeichnet,
daß die Tafeln ferner vertikale Rohre (28) umfassen, wobei die Rohre ein und derselben Spalte durch ihre Stapelung Säulen bilden, die vorgesehen sind, um auf einer Kernträgerplatte zu ruhen, und
daß die Vorrichtung massive vertikale Schlußelemente (32) umfaßt, die die Tafeln der verschiedenen Spalten, die zu derselben Reihe gehören, miteinander verbinden und die am Behälter (20) befestigt sind.

2. Umfassung nach Anspruch 1,
dadurch gekennzeichnet,
daß die Tafeln in drei Reihen und vier Spalten angeordnet sind.

3. Umfassung nach Anspruch 1 oder 2,
dadurch gekennzeichnet, daß
die vertikalen Rohre im Verhältnis zu den Trennwandplatten und den Schlußelementen so bemessen sind, daß ein vertikales Spiel zwischen den Trennwandplatten und den Schlußelementen zweier übereinander angeordneter Tafeln bestehen bleibt, und
daß ein Dichtband (50, 54) zwischen zwei übereinander angeordneten Platten oder Schlußelementen angeordnet ist und über sich gegenüberliegende Rillen der übereinander angeordneten Platten oder Schlußelemente vorsteht.

4. Umfassung nach Anspruch 1, 2 oder 3,
dadurch gekennzeichnet,
daß die Schlußelemente (32) aus winkelförmigen Profilen gebildet sind, die mit Mitteln zur Aufnahme von Schrauben zur Befestigung am Behälter (20) versehen sind.

5. Umfassung nach Anspruch 4,
gekennzeichnet durch
Verstärkungszwickel (40), die in die Schlußelemente in Höhe der horizontalen Verstärkungen (18) der Tafeln eingeschweißt sind.

6. Umfassung nach Anspruch 4 oder 5,
dadurch gekennzeichnet,
daß die Schlußelemente mit Vorsprüngen (34) versehen sind, die vertikal verteilt und vorgesehen sind, um in in Umfangsrichtung verlaufende Rillen (36) des Behälters (20) einzugreifen, die in der gleichen Höhe wie die horizontalen Verstärkungen der Tafeln angeordnet sind.

7. Umfassung nach Anspruch 5 oder 6,
dadurch gekennzeichnet,
daß eine rechteckige Aussparung (46) in wenigstens bestimmten der Verstärkungszwickeln gebildet ist und daß der Behälter (20) zylindrische Führungsstifte (48) trägt, die in die Ausnehmungen eingreifen.

8. Umfassung nach einem der vorhergehenden Ansprüche, dadurch gekennzeichnet,
daß die Rohre ein und derselben Spalte mit Hilfe von Zentrierhülsen (30) aufeinander ruhen, um eine Säule zu bilden,
daß jedes Rohr einer unteren Tafel auf der Kernträgerplatte abgestützt ist, und daß Rastmittel zwischen jedem Rohr einer oberen Tafel und dem Kernbehälter angeordnet sind, um auf das Rohr eine Kraft zum Andrücken der entsprechenden Säule gegen die untere Kernplatte auszuüben.

9. Umfassung nach Anspruch 8,
dadurch gekennzeichnet,
daß die Rastmittel einer Säule einen am Behälter befestigten Tragarm (64) und Mittel zum Drücken auf die Säule mit Hilfe elastischer Mittel (70) umfassen.

10. Umfassung nach einem der vorhergehenden Ansprüche,
dadurch gekennzeichnet,
daß die Verstärkungen mit Löchern für die Zirkulation in Umfangsrichtung und in vertikaler Richtung durchbrochen sind.

## Claims

1. A nuclear reactor core baffling device for location in the annular space between the core of the reactor, of prismatic shape, and a cylindrical casing, comprising vertical partition plates (16) which surround the core and strengthening elements located between the partition plates and the casing, having: panels (10, 12, 14) distributed into horizontal rows and vertical columns, all panels of a same row being mutually identical and having vertical partition plates (16) which are mutually welded and which are fast with crossed horizontal and vertical reinforcements baring on the casing,
characterized in that the panels further comprise vertical tubes (28), the tubes of a same column being stacked for forming posts arranged to rest on a core support plate and in that the device comprises solid vertical keys (32) connecting the panels of the different columns belonging to a same row and fixed to the casing (20).

2. Device according to claim 1, characterized in that the panels are distributed into three rows and four columns.

3. Device according to claim 1 or 2,
characterized in that the vertical tubes are proportioned with respect to the baffling plates and keys so that a vertical clearance exists between the baffling plates and the keys of two superimposed panels and in that a sealing strip (50, 54) is disposed between two superimposed plates or keys and projects into grooves facing the superimposed plates or keys.

4. Device according to claim 1, 2 or 3,
characterized in that the keys (32) are formed by structural sections in the form of angle irons, having means for receiving screws for connection to the casing (20).

5. Device according to claim 4,
characterized by reinforcement gussets (40) welded in the keys at the level of the horizontal reinforcements (18) of the panels.

6. Device according to claim 4 or 5,
characterized in that the keys are provided with bosses (34) spaced vertically apart and arranged for engaging circumferential grooves (36) of the casing (20), situated at the same level as the horizontal reinforcements of the panels.

7. Device according to claim 5 or 6,
characterized in that a rectangular indentation (46) is formed in some at least of the reinforcement gussets and in that the casing carries cylindrical indexing pins (48) projecting into the indentations.

8. Device according to any one of the preceding claims,
characterized in that the tubes of a same column rest on each other via centering sockets (30) to constitute a post, in that each tube of a lower panel rests on the core support plate and in that locking means are located between each tube of an uppermost panel and the core casing so as to exert on the tube a force applying the respective post against the core lower plate.

9. Device according to claim 8,
characterized in that the locking means of a post comprise a chair (64) fixed to the casing and means for exerting a force on the post via resilient means (70).

10. Device according to any one of the preceding claims,
characterized in that the reinforcements are formed with holes for circumferential and vertical flow.
